(19) Europäisches Patentamt

European Patent Office

Office européen des brevets

(11) **EP 1 570 430 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **03785541.8**

(22) Anmeldetag: **28.11.2003**

(51) Int Cl.:
*G06T 5/00* (2006.01)     *H04N 5/217* (2006.01)

(86) Internationale Anmeldenummer:
**PCT/DE2003/003939**

(87) Internationale Veröffentlichungsnummer:
**WO 2004/055727 (01.07.2004 Gazette 2004/27)**

(54) **VERFAHREN ZUR DIGITALEN BILDVERARBEITUNG VON CMOS-KAMERABILDERN**

DIGITAL IMAGE PROCESSING METHOD FOR CMOS CAMERA IMAGES

PROCEDE DE TRAITEMENT NUMERIQUE D'IMAGES DE CAMERAS CMOS

(84) Benannte Vertragsstaaten:
**AT BE BG CH CY CZ DE DK EE ES FI FR GB GR HU IE IT LI LU MC NL PT RO SE SI SK TR**

(30) Priorität: **13.12.2002 DE 10258662**

(43) Veröffentlichungstag der Anmeldung:
**07.09.2005 Patentblatt 2005/36**

(73) Patentinhaber: **Forschungszentrum Jülich GmbH 52425 Jülich (DE)**

(72) Erfinder: **SCHARR, Hanno 69115 Heidelberg (DE)**

(56) Entgegenhaltungen:
**GB-A- 2 239 572        US-A- 5 392 211
US-A- 5 923 722**

EP 1 570 430 B1

**Beschreibung**

Die Erfindung betrifft ein Verfahren zur digitalen Bildverarbeitung von CMOS-Kamerabildern.

Um Bilder mit Rechnersystemen bearbeiten zu können, müssen sie in Datenformate umgesetzt werden, die rechnerkompatibel sind. Diese Umsetzung heißt Digitalisierung. In der digitalen Bildverarbeitung werden die Originalbilddaten in rechnerkonforme Datenformate transformiert. Sie stehen dann als zwei- oder mehrdimensionale Funktionen für die Bearbeitung zur Verfügung.

Bei der Bildaufnahme wird eine kontinuierliche Szene räumlich diskretisiert. Eine Möglichkeit der mathematischen Beschreibung von digitalisierten Bilddaten ist die Notation als Bildmatrizen. Das Bild S (die Szene S) ist eine rechteckige Matrix (Bildmatrix) $S = (s(x, y))$ mit Bildzeilen und Bildspalten. Der Zeilenindex ist x und der Spaltenindex ist y. Der Bildpunkt (Pixel) an einer Stelle (Zeile, Spalte) = (x, y) besitzt den Grauwert $s(x, y)$. Es werden also Elementarbereiche der Szene auf je ein Pixel der Bildmatrix abgebildet. Zur Digitalisierung von Bilddaten ist eine Rasterung und eine Quantisierung notwendig. Bei der Rasterung wird das zu digitalisierende Bild durch die Überlagerung mit einem rechteckigen oder quadratischen Gitter in Rasterflächenstücke unterteilt. Bei der Quantisierung wird jedem Rasterflächenstück ein Grauwert $s(x, y)$ aus einer Grauwertmenge G zugewiesen. Die Bestimmung dieses Grauwertes kann punktuell erfolgen oder durch Mittelung über die Rasterfläche.

Zur Erfassung digitaler Bilddaten werden neben CCD-Kameras vielfach auch CMOS-Kameras eingesetzt. Diese Kameras finden vielfältigen Einsatz in Wissenschaft und Industrie wie z. B. Crashaufnahmen und für die Überwachung schneller technischer Abläufe in der Produktion.

CMOS-(Complementary Metal Oxide Semiconductor) Kameras verfügen gegenüber CCD-Bildsensoren über eine hohe Helligkeitsdynamik sowie höhere zulässige Betriebstemperaturen. Die auf die Photodioden der CMOS Kamera eintreffenden Lichtpartikel (Photonen) werden in elektrischen Strom umgewandelt. Den lichtempfindlichen Photodioden sind mehrere Transistoren beigeordnet. Die CMOS-Kamerapixel bestimmen ihren Grauwert (Signal) aus dem aktuellen Photostrom der Photodioden. Jeder Pixel kann einzeln gelesen und ausgewertet werden. Dies ermöglicht den wahlfreien Zugriff auf die jeweils interessanten Bildteile und hat insbesondere Vorteile in der industriellen Bildverarbeitung. Mit Hilfe von CMOS-Kameras können sehr hohe Bildraten erzielt werden (extreme Zeitlupe). Die Zugriffszeiten auf einzelne Pixel sind dabei naturgemäß sehr kurz, d. h. der aktuelle Photostrom hat nur eine sehr kurze Einstellzeit zur Verfügung.

Bei hohen Kontrasten und sich bewegenden, bzw. sich schnell verändernden Objekten, dominieren vor allem bei hohen Bildraten die noch nicht abgeklungenen starken Ströme von ehemals hellen Bildbereichen die jetzt dunkel gewordenen Signalbereiche. Die in der Pixelschaltung enthaltenen "parasitären" Kapazitäten (siehe [4], Kapitel 8.3) bewirken eine zeitliche Verschmierung des Pixelsignals. Dieser Effekt wird im Rahmen der vorliegenden Erfindung als "kapazitiver Nachleuchteffekt" bezeichnet. Die durch die üblicherweise logarithmische Darstellung der Werte sehr hohe Grauwertauflösung der Kamera ist dadurch stark reduziert, bzw. es werden stark fehlerbehaftete Werte geliefert. Bewegt sich beispielsweise ein helles Signal über einen relativ dunklen Hintergrund, z. B. ein Schweißpunkt über ein Blech, so zieht es einen Schweif hinter sich her (vgl. [4], S. 37). Dieser Schweif überdeckt den dunkleren Hintergrund. Möchte man z. B. beim Schweißen eines Bleches die Schweißnaht direkt hinter dem Schweißpunkt kontrollieren, so muß man warten, bis der Schweif von dem Nahtstück verschwunden ist.

Es gibt mehrere Möglichkeiten, diesen nachteiligen Effekt des kapazitiven Nachleuchtens auf die Geschwindigkeit der Bildaufnahme zu korrigieren:

Durch eine mäßige Untergrundbeleuchtung kann die Entladung von hellen Pixeln deutlich beschleunigt werden.

Ist die Bewegungsrichtung bekannt, kann ferner bei bestimmten Anwendungen, bei denen die Position von realen Objekten oder von projizierten Mustern erfaßt werden soll, die Analyse entgegen der Bewegungsrichtung erfolgen, d. h. man detektiert den schnellen Wechsel von dunkel auf hell. Diese Verfahren eignen sich allerdings nur bei bestimmten Anwendungen, wenn beispielsweise die Beleuchtung bzw. die gesamte Aufnahmesituation bekannt ist bzw. gesteuert werden kann. Die genannten Auswertestrategien können nicht sichtbare Signalanteile aber lediglich ignorieren bzw. umgehen, nicht rekonstruieren.

Die Auswertung von optischen Prozessen wie z. B. für das Abklingen der Temperatur in Wärmebildern erfolgt mittels mathematischer Modelle. So ist beispielsweise aus [3], Fig.9 die Verwendung einer Differentialgleichung (DGL) bekannt. Bei diesem Verfahren werden die physikalischen Bedingungen der Bildaufnahme in einer DGL beschrieben und unbekannte Parameter dieser DGL numerisch geschätzt. Bekannte lokale Schätzverfahren sind hierbei u.a. "ordinary least squares (OLS)", "total least squares (TLS)" und "mixed OLS-TLS" [5], die alle eine spezielle Ausprägung, der jedem Standardwerk der Numerik zu entnehmenden Methode, der kleinsten Quadrate sind. Weiterhin sind sogenannte Variationsverfahren mit Daten- und Glattheitstermen gebräuchlich (siehe z. B. [1, 6]).

Die Anwendung entsprechender Modelle für die Auswertung von CMOS-Kamerabildern wurde bisher in der Literatur nicht beschrieben.

Das Dokument US-A-5 923 722 offenbart, dass das Ausgangssignal sich aus einem "Quellterm" und aus einem weiteren Term zusammensetzt. Weiterhin hängt der weitere Term von vorangegangenen Ausgangssignalen ab und dieser Term muss subtrahiert werden, um das korrigierte Bildsignal zu erhalten. Es ist weiterhin bekannt, dass eine Exponentialfunktion die Lösung einer Differentialgleichung, wie die in der vorliegenden Anmeldung angegebene Gleichung (1) ohne "Quellterm", ist. Jedoch wird in US-A-5 923 722 nicht berücksichtigt, dass eine zeitliche Änderung des Ortes des Nachleuchteffekts, z.B. bei Bewegungen in den Bildern, stattfinden kann.
Die im Anspruch angegebene Differenzialgleichung berücksichtigt diese Änderung.

Es ist daher Aufgabe der Erfindung ein Verfahren und eine Vorrichtung zu schaffen, mit dem eine verbesserte digitale Bildverarbeitung von CMOS-Kamerabildern möglich ist.

Ausgehend vom Oberbegriff des Anspruchs 1 wird die Aufgabe erfindungsgemäß gelöst, mit den im kennzeichnenden Teil des Anspruchs 1 angegebenen Merkmalen.

Mit dem erfindungsgemäßen Verfahren ist es nunmehr möglich, eine schnelle und direkte Auswertung von sich bewegenden Bildern mit hohen Kontrasten zu ermöglichen, ohne daß kapazitive Nachleuchteffekte zu einer verzögerten Auswertung führen. Es wird möglich, den aktuellen Photostrom ohne die kapazitiven Nachleuchteffekte, die sich aus physikalischen Gründen nicht vermeiden lassen, auszuwerten. Es wird weiterhin möglich, hohe dynamische Änderungen von hell nach dunkel (hoher Kontraste) z. B. in Hochgeschwindigkeits-Aufnahmen zu rekonstruieren. Es wird möglich, Intensitäten mit minimierten Einflüssen des Nachleuchtens quantitativ auszuwerten.

Vorteilhafte Weiterbildungen sind in den Unteransprüchen angegeben.

Im Folgenden soll die Erfindung beispielhaft beschrieben werden.

Der Zusammenhang zwischen Kapazitäten, Photostrom und Bilddaten läßt sich für bewegte Objekte mit Hilfe einer in den Grauwerten linearen partiellen Differentialgleichung (1) darstellen, die wie folgend formuliert werden kann:

$$\frac{\mathrm{d}g(x,y,t)}{\mathrm{d}t} = c(x,y,t)g(x,y,t) + q(x,y,t)$$

$$\Leftrightarrow \frac{\partial g}{\partial x}u_x + \frac{\partial g}{\partial y}u_y + \frac{\partial g}{\partial t} - c(x,y,t)g(x,y,t) - q(x,y,t) = 0 \tag{1}$$

.

Dabei gilt:

$g$ = Grauwert der Bildfolge

$c$ = Abklingkonstante (normalerweise negativ)

$q$ = interessierender Quellterm (Licht)

$u$ = lokale (Objekt-)Verschiebung u=(dx/dt, dy/dt)

Der Grauwert $g$ der Bildfolge stellt die von der CMOS-Kamera direkt gelieferten, unkorrigierten Bilddaten dar. Sie sind das eigentliche Ausgangssignal. Unter der Bezeichnung Ausgangssignalwert ist im Folgenden das gesamte durch den Photonenstrom erzeugte Meßsignal $g$ zu verstehen.

Die Abklingkonstante $c$ ist der physikalische Parameter, der der Entladungsgeschwindigkeit der Kapazitäten in der CMOS-Kamera entspricht. Die aus der Kapazität zwischen den Auslesevorgängen abgeflossene Ladungsmenge wird durch den Ausdruck $c*g$ angegeben.

Der Quellterm $q$ stellt die zum Zeitpunkt t zum Photostrom $g$ hinzukommende Ladung dar. Damit ist $q$ das interessierende Zielsignal.

Durch Subtraktion des Terms $c*g$ von der zeitlichen Änderung des Ausgangssignalwerts $g$ kann der aktuelle Photostrom ohne kapazitive Nachleuchteffekte, nämlich der Quellterm $q$, der im Folgenden als Zielsignalwert bezeichnet wird, bestimmt werden.

Eine vorteilhafte Ausgestaltung des Verfahrens ist dadurch gekennzeichnet, daß eine Parameterschätzung durchgeführt wird. Dieser Verfahrensschritt ist für Bilddaten mit hohen Kontrasten besonders geeignet, da hier Nachleuchteffekte relevant sind. Diese Bereiche lassen sich schnell und einfach detektieren, beispielsweise mittels des in [1] beschriebenen lokalen Kontrastmaßes, gefolgt von einer Schwellwertsegmentierung. Beschränkt man die Parameterschätzung auf diese Bereiche, so kann eine erhebliche Beschleunigung der Berechnung erreicht werden.

Aus der Literatur [3] ist die "total least squares" (TLS) Methode für die allgemeine Parameterschätzung in partiellen Differentialgleichungen dieses Typs bekannt. Sie eignet sich beispielsweise dazu, diese Parameterschätzung durchzuführen. Auch andere, zum Teil oben genannte, bekannte Parameterschätzverfahren wie z. B. die "ordinary least squares (OLS)" oder die "Mixed OLS-TLS" und/oder Variationsmethoden sind für diese Schätzung geeignet.

In einer vorteilhaften Ausgestaltung des Verfahrens läßt sich der Quellterm $q$ mit Hilfe einer Parameterschätzung wie z. B durch die Methode der "total least squares" [3] aus den originalen Ausgangssignalwerten bestimmen. Hierzu wird die oben angegebene Differentialgleichung (1) verwendet. Aus dem Ausgangssignal $g$ werden dabei mittels diskreter Faltungen mit Ableitungskernen die raum-zeitlichen Ableitungen von $g$ bestimmt. Diese und alle bereits z. B. aus Kalibrierschritten oder Aufnahmebedingungen bekannten Parameter werden in (1) eingesetzt. Aus dem so entstandenen Gleichungssystem wird q(x, y, t) per Parameterschätzung ermittelt.

Eine vorteilhafte Ausgestaltung des erfindungsgemäßen Verfahrens ist dadurch gekennzeichnet, daß die Abklingkonstante $c$ ebenfalls durch Parameterabschätzung bestimmt werden kann.

Eine vorteilhafte Ausgestaltung des erfindungsgemäßen Verfahrens ist dadurch gekennzeichnet, daß die Abklingkonstante $c$ durch vorherige Kalibration der CMOS-Kamera bestimmt werden kann. Sie muß dann nicht mehr durch Parameterschätzung bestimmt werden. Dadurch wird eine Beschleunigung des Verfahrens ermöglicht. Die Abklingkonstante $c$ ist unter genügend konstanten Betriebsbedingungen eine nur von der Kamera abhängige, zeitlich nicht variable Größe, d.h. $c = c(x, y)$. Bei guter Homogenität der Pixel ist $c = \text{const}$. Die Abklingkonstante $c$ läßt sich daher auch offline in einem Kalibrierungsschritt berechnen.

Eine vorteilhafte Ausgestaltung des erfindungsgemäßen Verfahrens ist dadurch gekennzeichnet, daß die Objektbewegung $u$ ebenfalls durch Parameterschätzung bestimmt werden kann. Bereits bekannte Objektbewegungen müssen nicht geschätzt werden. Die Parameter $u_x$ und $u_y$ können dann in die Differentialgleichung (1) eingesetzt werden. Die Parameterschätzung wird dadurch vereinfacht und beschleunigt.

Eine vorteilhafte Ausgestaltung des Verfahrens ist dadurch gekennzeichnet, daß das erfindungsgemäße Verfahren mit Hilfe von FPGA's (Field Programmable Gate Arrays) implementiert wird. Beschränkt man die Ausgangssignalwerte auf nicht zu große Bildausschnitte, so wird es möglich, Bildraten von mehreren Bildern pro Sekunde zu erreichen.

**Literatur:**

[1]: B. Jähne, Digitale Bildverarbeitung, 4. Aufl., Springer, 1997.

[2]: B. Jähne, H. Haußecker, P. Gleißler (EDS.) Handbook of Computer Vision and Applications, Volume 1. Sensors ans Imaging, Academic Press, 1999.

[3]: Horst W. Haußecker and David J. Fleet, Computing Optical Flow with Physical Models of Brightness Variation IEEE Trans. PAMI, Vol. 23, No. 6, pp 661-673, June 2001.

[4]: T. Seiffert, Meßverfahren und Kenngrößen zur Beurteilung des dynamischen Kontrastauflösungsvermögens elektronischer Bildaufnehmer, Diplomarbeit, Universität Karlsruhe (TH), 2001.

[5]: C. Garbe, Measuring Heat Exchange Processes at the Air-Water Interface from Thermographic Image Sequence Analysis, Doktorarbeit, Universität Heidelberg, 2001.

[6]: J. Weickert und C. Schnörr, Variational Optic Flow Computation with a Spatio-Temporal Smoothness Constraint, Technical Report 15/2000 Computer Science Series, Juli 2000.

**Patentansprüche**

1. Verfahren zur digitalen Bildverarbeitung in CMOS-Kamerabildern,
**dadurch gekennzeichnet,**
**dass** der Quellterm q aus der Gleichung (1)

$$\frac{\mathrm{d}g(x,y,t)}{\mathrm{d}t} = c(x,y,t)\,g(x,y,t) + q(x,y,t)$$

$$\Leftrightarrow \frac{\partial g}{\partial x}u_x + \frac{\partial g}{\partial y}u_y + \frac{\partial g}{\partial t} - c(x,y,t)\,g(x,y,t) - q(x,y,t) = 0$$

(1)

mit g = Grauwert der Bildfolge
u = Objektverschiebung (Verschiebungsvektorfeld)
c = Abklingkonstante
q = interessierender Quellterm (Licht)
berechnet und als Zielsignal verwendet wird.

2. Verfahren nach Anspruch 1,
   **dadurch gekennzeichnet,**
   **dass** für Bereiche von Bilddaten mit hohen Kontrasten eine Parameterschätzung durchgeführt wird.

3. Verfahren nach Anspruch 2,
   **dadurch gekennzeichnet,**
   **dass** zur Parameterschätzung die "total least squares" (TLS), "ordinary least squares" (OLS), "Mixed OLS-TLS" und/oder Variationsmethoden verwendet werden.

4. Verfahren nach einem der Ansprüche 1 bis 3,
   **dadurch gekennzeichnet,**
   **dass** die Abklingkonstante $c$ und/oder die Objektverschiebung $u$ durch Parameterschätzung aus den Bilddaten bestimmt wird.

5. Verfahren nach einem der Ansprüche 1 bis 4,
   **dadurch gekennzeichnet,**
   **dass** die Abklingkonstante $c$ durch Kalibration der Kamera bestimmt wird.

6. Verfahren nach einem der Ansprüche 1 bis 5,
   **dadurch gekennzeichnet,**
   **dass** bekannte Objektbewegungen $u_x$ und $u_y$ direkt in die Differentialgleichung (1) eingesetzt werden.

7. Verwendung vor Field Programmable Gate Arrays (FPGA's) zum Implementieren des verfahrens nach einem der Ansprüche 1 bis 6.

**Claims**

1. Method for digital image processing of CMOS camera images, **characterised in that** the source term q in the equation (1)

$$\frac{dg(x,y,t)}{dt} = c(x,y,t)g(x,y,t) + q(x,y,t)$$

$$\Leftrightarrow \frac{\partial g}{\partial x}u_x + \frac{\partial g}{\partial y}u_y + \frac{\partial g}{\partial t} - c(x,y,t)g(x,y,t) - q(x,y,t) = 0$$

$$(1)$$

where g = grey value of the image sequence,
u = object displacement (displacement vector field)
c = decay constant
q = source term of interest (light),
is calculated and used as the target signal.

2. Method according to claim 1, **characterised in that** for regions of image data with high contrast, parameter estimation is carried out.

3. Method according to claim 2, **characterised in that**, for parameter estimation, the total least squares (TLS), ordinary least squares (OLS), mixed OLS-TLS and/or variation methods are used.

4. Method according to one of the claims 1 to 3, **characterised in that** the decay constant c and/or the object displacement u is determined by parameter estimation from the image data.

**5.** Method according to one of the claims 1 to 4, **characterised in that** the decay constant c is determined by calibration of the camera.

**6.** Method according to one of the claims 1 to 5, **characterised in that** known object movements $u_x$ and $u_y$ are inserted directly into the differential equation (1).

**7.** Use of field programmable gate arrays (FPGAs) for implementing the method according to one of the claims 1 to 6.

**Revendications**

**1.** Procédé pour le traitement numérique d'images en images de caméra CMOS,
   **caractérisé en ce que**
   le terme source q de l'équation (1)

$$\frac{\mathrm{d}\, g\,(x,y,t)}{\mathrm{d}\,t} = c\,(x,y,t)\,g\,(x,y,t) + q\,(x,y,t)$$

$$\Leftrightarrow \frac{\partial g}{\partial x} u_x + \frac{\partial g}{\partial y} u_y + \frac{\partial g}{\partial t} - c\,(x,y,t)\,g\,(x,y,t) - q\,(x,y,t) = 0 \qquad (1)$$

   où g = valeur de gris de la séquence d'images
   u = décalage d'objets (champ vectoriel de déplacement)
   c = constante d'évanouissement
   q = terme source concerné (lumière)
   est calculé et utilisé comme signal cible.

**2.** Procédé selon la revendication 1,
   **caractérisé en ce que**
   une évaluation des paramètres est réalisée pour les zones de données images avec des contrastes importants.

**3.** Procédé selon la revendication 2,
   **caractérisé en ce que**
   l'on utilise, pour l'évaluation des paramètres, des méthodes des moindres carrés totaux (TLS), des moindres carrés ordinaires (OLS), des méthodes mixtes OLS-TLS et/ou des méthodes de variation.

**4.** Procédé selon l'une quelconque des revendications 1 à 3,
   **caractérisé en ce que**
   la constante d'évanouissement c et/ou le décalage d'objets u est déterminé par l'évaluation des paramètres à partir des données images.

**5.** Procédé selon l'une quelconque des revendications 1 à 4,
   **caractérisé en ce que**
   la constante d'évanouissement c est déterminée par l'étalonnage de la caméra.

**6.** Procédé selon l'une quelconque des revendications 1 à 5,
   **caractérisé en ce que**
   des déplacements d'objets connus $u_x$ et $u_y$ sont introduits directement dans l'équation différentielle (1).

**7.** Utilisation de réseaux prédiffusés programmables (Field Programmable Gate Arrays, FPGA) pour la mise en oeuvre du procédé selon l'une quelconque des revendications 1 à 6.